# EUROPÄISCHE PATENTANMELDUNG

(11) **EP 0 715 938 A1**
(43) Veröffentlichungstag der Anmeldung: **12.06.1996**
(21) Anmeldenummer: 95118739.2
(22) Anmeldetag: 29.11.1995
(51) Int. Cl.: B29C 45/17, B30B 15/04

(54) **Verfahren zum Vorspannen von Bolzen für Verbindungen, sowie Vorrichtung zu dessen Durchführung**

(30) Priorität: 08.12.1994 DE 4443661
(71) Anmelder: Fahr Bucher GmbH, D-78240 Gottmadingen (DE)
(72) Erfinder: Kurth, Erhard, CH-5304 Endingen (CH)

(57) **Zusammenfassung**

Vorzugsweise in Pressen zur Verarbeitung von Kunststoffen wird ein Vorspannen von auf Zug beanspruchten Säulen (23) nicht durch Anziehen von Haltemuttern (20), sondern durch Verwendung der hydraulischen Presseinrichtung über einen Hilfsklotz erreicht. Nach Belastung einer Pressplatte (22) mit einer Presskraft grösser als die maximale Betriebsbelastung entstehen zwischen Anschlägen (31) an den Säulen (23) und der Pressplatte (22) bzw. Gegen-Halteflanschen an einem Hydraulikzylinder Lücken (Δℓ). Diese Lücken (Δℓ) werden durch Verstellen von Gewinderingen (34), welche in Bohrungen (32) für die Säulen (23) in der Pressplatte (22) oder in dem Hydraulikzylinder eingesetzt sind, kraftschlüssig überbrückt. Nach Entlastung der Pressplatte (22) von der Presskraft bleibt die erforderliche Vorspannung bestehen.

## Beschreibung

Die Erfindung betrifft ein Verfahren zum Vorspannen von Bolzen für Verbindungen, welche im Betrieb mittels eines zwischen einem Halteteil und einem Anschlag eingespannten Kraftübertragungsteiles mit Zugkräften von einstellbarer Grösse beaufschlagt werden, insbesondere von Säulen in Pressen zur Verarbeitung von Kunststoffen, sowie eine Vorrichtung zu dessen Durchführung.

Aus EP-A1 0 566 547 (OVAKO) ist ein Verfahren zum Vorspannen von Gehäusebolzen bekannt. Hierbei handelt es sich um Bolzen für Gehäuseabdeckungen von Dampf- und Gasturbinen und von Ventilen für solche Turbinen, welche an Stellen mit beschränkter seitlicher Zugänglichkeit in Gruppen und parallel zueinander angeordnet sind. Dieses Verfahren arbeitet mit einem Anbringen eines Brückenelementes auf den Endflächen von mit Gewinde versehenen Enden zweier oder mehrerer Stützbolzen. Dabei sind die Stützbolzen an entgegengesetzten Seiten des vorzuspannenden Bolzens angeordnet. Das Vorspannen dieses Bolzens erfolgt dann durch ein am Brückenelement angebrachtes hydraulisches Spannelement.

Dieses Verfahren ist nur bei einer bestimmten Anordnung der Bolzen verwendbar und erfordert die Verwendung zusätzlicher Brückenelemente und hydraulischer Spannelemente.

Der Erfindung liegt die Aufgabe zugrunde, ein Verfahren zum Vorspannen von Bolzen für Verbindungen anzugeben, welche im Betrieb mittels eines zwischen einem Halteteil und einem Anschlag eingespannten Kraftübertragungsteiles mit Zugkräften von einstellbarer Grösse beaufschlagt werden. Dabei sind die genannten Nachteile und aufwendige Manipulationen mit Spannwerkzeugen von Hand zu vermeiden.

Gemäss der Erfindung wird diese Aufgabe dadurch gelöst, dass - a) die Verbindung soweit hergestellt wird, dass sie mit den Betriebskräften belastbar ist, dass - b) dann die Verbindung mittels des Kraftübertragungsteiles mit einer Zugkraft grösser als die maximale Betriebsbelastung belastet wird, dass - c) dann eine Lücke zwischen dem Kraftübertragungsteil und dem Anschlag mittels eines Füllelementes kraftschlüssig geschlossen wird und dass schliesslich - d) die Belastung gemäss b) wieder aufgehoben wird.

Es erweist sich dabei zum Vorspannen mehrerer, im Betrieb gleichzeitig belasteter Bolzen als besonders vorteilhaft, wenn die Belastung erst dann wieder aufgehoben wird, wenn die Lücken an allen Bolzen geschlossen sind. Weitere bevorzugte Ausführungsformen sind in den Patentansprüchen gekennzeichnet.

Die Erfindung ist in der folgenden Beschreibung und den Zeichnungen, die Ausführungsbeispiele darstellen, näher erläutert.

Es zeigen:
Fig. 1 eine Seitenansicht einer Spritzgiessanlage für Erzeugnisse aus Kunststoff mit Beschickungseinheit, Formeinheit und Formzustelleinheit,
Fig. 2 einen Teilschnitt einer Formeinheit und Formzustelleinheit gemäss Fig. 1,
Fig. 3a einen Teilschnitt an einer Formeinheit gemäss Fig. 2 mit einem erfindungsgemässen verstellbaren Einsatz und einer nicht vorgespannten Säule, und
Fig. 3b einen Teilschnitt an einer Formeinheit gemäss Fig. 2 mit einem erfindungsgemässen verstellbaren Einsatz und einer vorgespannten Säule.

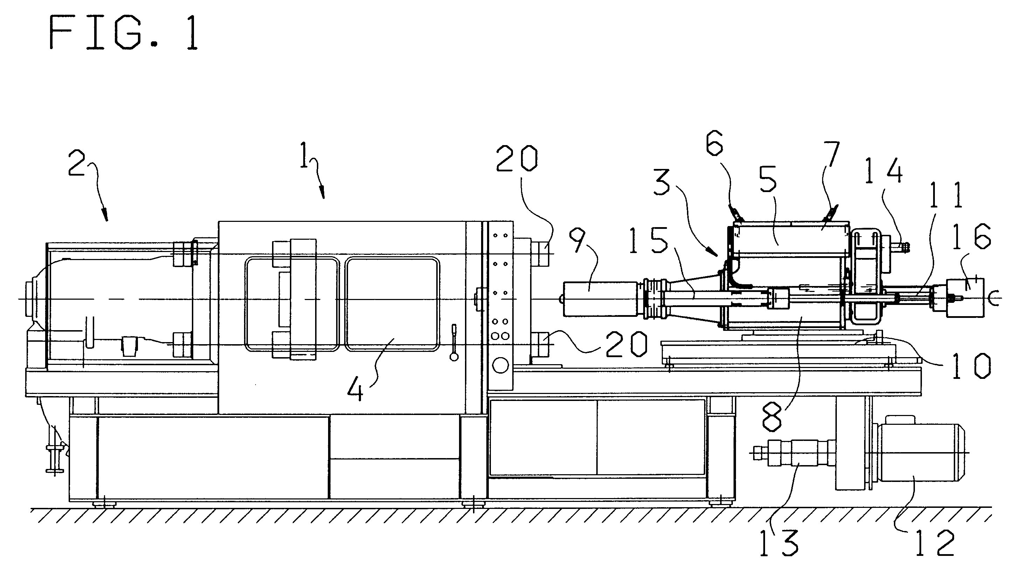

Die in Fig. 1 schematisch dargestellte Spritzgiessanlage umfasst eine Formeinheit 1 zum Einsatz und zur Halterung einer nicht mit gezeigten Spritzform, eine Zustelleinheit 2 für einen Teil der Spritzform und eine Einheit 3 zur Beschickung der Spritzform mit Spritzgut, z.B. mit glasfaserbeladenem Polyestermaterial. Die Zustelleinheit 2 umfasst vier Säulen oder Holme, welche mit Zugkräften von einstellbarer Grösse beaufschlagt werden, sie wird daher auch als Kunststoffpresse bezeichnet.

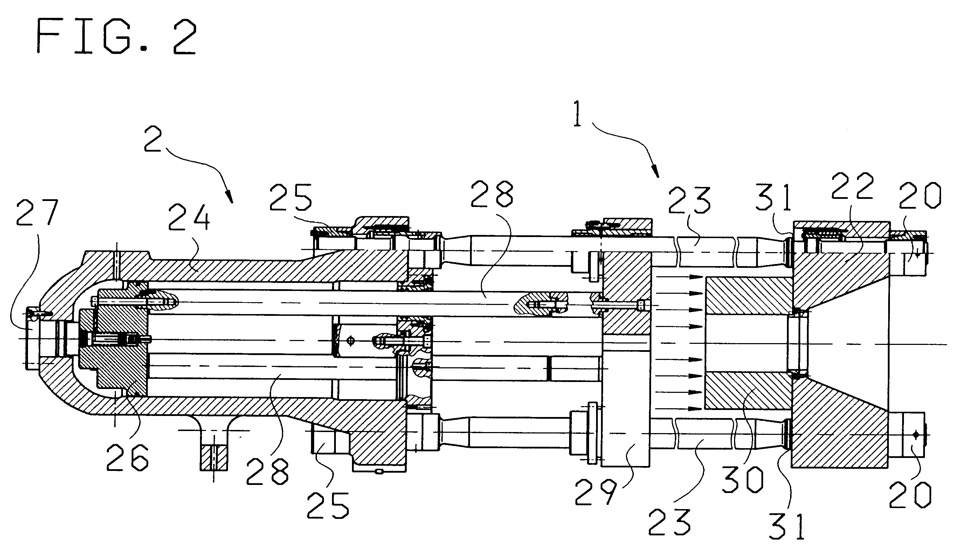

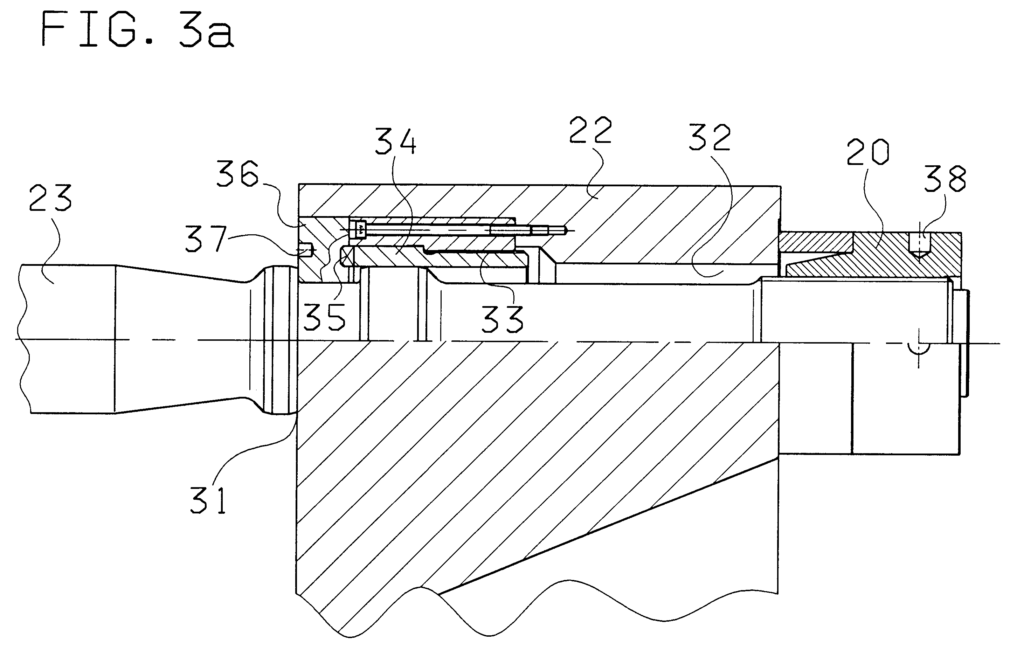

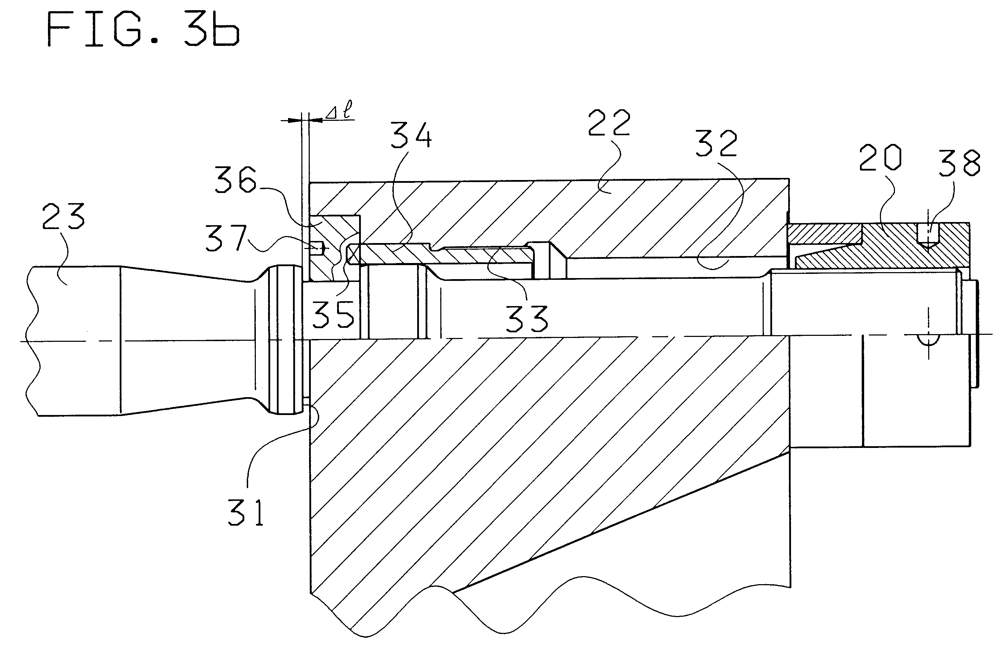

In der Formeinheit 1 wird in einer Öffnung 4 eine nicht gezeigte Spritzform angebracht. Diese Spritzform besteht aus zwei Teilen, welche einen Hohlraum für das zu spritzende Produkt umfassen. Der erste Teil ist an der, der Beschickungseinheit 3 zugewandten Seite angebracht und weist eine Einspritzöffnung für das Polyestermaterial auf. Der zweite Teil der Spritzform steht dem ersten Teil gegenüber und kann mit einer Hydraulik in der Zustelleinheit 2 an den ersten Teil mit einer Druckkraft dichtend herangefahren werden. Nach Fertigstellung des Produktes wird der zweite Teil der Spritzform wieder zurückgefahren, und das fertige Produkt wird ausgestossen. Wie in Verbindung mit Fig. 2 und 3 im Einzelnen beschrieben, ist der erste Teil der Spritzform beschickungsseitig an einer Pressplatte befestigt, welche ihrerseits an vier Säulen mittels Haltemuttern 20 gegengehalten und eingespannt ist.

Die Beschickungseinheit 3 umfasst einen Einfüllbehälter 5 für das Spritzgut, an dem zwei Sensoren 6, 7 für die Füllhöhe angebracht sind. Mit Hilfe eines an den Einfüllbehälter 5 angeschlossenen Schneckenförderers 8 wird das Spritzgut in eine Spritzeinheit 9 gefördert. Die Beschickungseinheit 3 wird für den Spritzvorgang auf einem Bett 10 an die in der Formeinheit 1 angebrachte Spritzform herangefahren. Anschliessend wird das Spritzgut mittels eines Spritzkolbens 11 aus der Spritzeinheit 9 in die Spritzform eingespritzt.

Für den Antrieb der Bewegungs- und Förderorgane der Beschickungseinheit 3 ist, wie Fig. 1 zeigt, eine, von einem Elektromotor 12 angetriebene Hydraulikpumpe 13 vorgesehen. Von dieser Pumpe 13 führen nicht dargestellte Speiseleitungen zu einem Antriebsmotor 14 für den Schneckenförderer 8, zu zwei Hydraulikzylindern 15 für den Linearantrieb des Spritzkolbens 11 und zu einem Motor 16 zum Betrieb der Plastifizierschnecke des Spritzkolbens 11.

Der Teilschnitt einer Formeinheit und Formzustelleinheit gemäss Fig. 2 zeigt von der Seite gesehen eine feststehende Pressplatte 22, welche an vier Säulen 23 mittels Haltemuttern 20 (vgl. Fig. 1) gegen Anschläge 31 an den Säulen 23 befestigt ist. Die Säulen 23 verbinden die Pressplatte 22 mit einem Hydraulikzylinder 24 der Formzustelleinheit, an welchem sie ebenfalls mit Haltemuttern 25 befestigt sind. Im Hydraulikzylinder 24 befindet sich ein Kolben 26, welcher über eine Zuführöffnung 27 im Hydraulikzylinder 24 angetrieben wird. Der Kolben 26 ist über Schubstangen 28 mit einer beweglichen Pressplatte 29 verbunden, welche auf den Säulen 23 geführt ist.

Wie schon in Verbindung mit Fig. 1 angedeutet, ist beim Betrieb der soweit beschriebenen Spritzgiessanlage an den Pressplatten 22 und 29 je ein Teil eines Spritzwerkzeuges befestigt, welches aber nicht mit dargestellt ist. Anstelle eines solchen Spritzwerkzeuges zeigt Fig. 2 einen an der Platte 22 befestigten Hilfsklotz 30. Durch den Kolben 26 sind also die Verbindungen der Haltemuttern 20 mit den Säulen 23 über die Schubstangen 28, die Platte 29, den Hilfsklotz 30 und die Platte 22 mit Zugkräften von einstellbarer Grösse beaufschlagbar. Dabei ist die Platte 22 als Kraftübertragungsteil zwischen den Haltemuttern 20 als Halteteilen und den Anschlägen 31 an den Säulen 23 eingespannt.

Fig. 3a zeigt in einem Teilschnitt die feststehende Platte 22 zwischen einer Haltemutter 20 und einem Anschlag 31 an einer Säule 23 gemäss Fig. 2 in vergrösserter Darstellung. Man erkennt, dass die Säule 23 durch eine Bohrung 32 in der Platte 22 hindurch geführt ist. An der dem Anschlag 31 zugewandten Seite ist in einem mit Gewinde 33 versehenen Teil der der Bohrung 32 ein Gewindering 34 eingeschraubt. Der Gewindering 34 greift über Mitnehmer 35 in einen vorgelagerten geteilten Ring 36 ein, durch welchen er verstellbar und kraftschlüssig mit dem Anschlag 31 an der Säule 23 verbindbar ist. Zur Aufnahme eines Stellwerkzeuges besitzt der geteilte Ring 36 Ausnehmungen 37.

In Fig. 3a ist vorausgesetzt, dass die Schraubverbindung zwischen den Haltemuttern 20 und den Säulen 23 soweit hergestellt ist, dass sie mit den Betriebskräften vom Kolben 26 gemäss Fig. 2 belastbar ist. Eine solche Verschraubung ist mittels eines Handwerkzeuges über eine hierfür an der Haltemutter 20 vorgesehene Ausnehmung 38 ohne wesentlichen Kraftaufwand möglich. In dem der Fig. 3a entsprechenden Teilschnitt gemäss Fig. 3b ist nun die Platte 22 vom Kolben 26 her mit einer Kraft grösser als die maximale Betriebsbelastung beaufschlagt. Wie insbesondere Fig. 2 erkennen lässt, hat diese Belastung eine Spannung der vier Säulen 23 zur Folge, welche von der Platte 22 und dem Hydraulikzylinder 24 auf die Haltemuttern 20, 25 aufgebracht wird.

Diese Spannung hat eine Dehnung der Säulen 23 in deren Bereich zwischen den endseitigen Haltemuttern zur Folge. Wie Fig. 3b zeigt, entsteht durch die Dehnung des Teilbereiches der Säule 23 zwischen dem Anschlag 31 und der Haltemutter 20 zwischen Anschlag 31 und dem vorgelagerten geteilten Ring 36 eine Lücke der Breite Δℓ, welche einer erwünschten Vorspannung dieses Teilbereiches der Säule 23 entspricht. Durch die genannte Belastung der Platte 22 ergeben sich solche Vorspannungen und Lücken gleichmässig an den entsprechenden Teilbereichen aller vier Säulen 23.

Die entstandenen Lücken der Breite Δℓ werden nun erfindungsgemäss durch Herausdrehen des Gewinderinges 34 mittels des vorgelagerten geteilten Ringes 36 kraftschlüssig geschlossen. Wie Fig. 2 entnehmbar, ergeben sich durch die beschriebene Vorspannung neben den vier Lücken der Breite Δℓ an der Platte 22 bei entsprechendem Vorgehen am Hydraulikzylinder 24 auf der anderen Seite der Säulen 23 noch weitere vier derartige Lücken, welche in entsprechender, aber nicht im Einzelnen dargestellter Art ebenfalls kraftschlüssig geschlossen werden. Nachfolgend wird die Belastung am Hilfsklotz 30 wieder entfernt.

Diese Belastung muss so gross gewählt sein, dass nach deren Entfernung an den genannten Endbereichen der Säulen 23 eine Vorspannung verbleibt, welche grösser ist als jene Spannung, welche im Betrieb der Presse durch die maximale Betriebsbelastung entsteht. Beim Aufbringen solcher Betriebsbelastungen werden die Verbindungen zwischen den geteilten Ringen 36 und den Säulenanschlägen 31 entlastet, was eine geringfügige Zusatzdehnung der vorgespannten Säulenbereiche zur Folge hat. Da diese Zusatzdehnung viel geringer ist als die entsprechende ohne Vorspannung auftretende Betriebsdehnung, werden insbesondere die vorgespannten Säulenbereiche, welche einer Kerbwirkung unterliegen, wie Gewinde der Haltemuttern 20, 25 viel weniger beansprucht. Dieser Vorteil ist in an sich bekannter Weise der Grund, warum Vorspannungen an Bolzen verwendet werden.

Für den Fachmann ist klar, dass die Erfindung nicht auf die oben beschriebenen Ausführungsbeispiele beschränkt ist. Es kann vorteilhaft sein, den Einsatz an der feststehenden Pressplatte 22 nicht als Gewindering 34, sondern als Distanzstück von passender vorgewählter Dicke auszuführen, um damit ein weiteres belastetes Gewinde 33 in der Bohrung 32 der Platte 22 zu vermeiden. Es ist sogar möglich, die Haltemuttern 20, 25 an den Säulen 23 der Kunststoffpresse durch gewindelose Halteteile zu ersetzen, weil die Spannfunktion ja durch die Zustelleinheit 2 übernommen wird.

## Patentansprüche

1. Verfahren zum Vorspannen von Bolzen (23) für Verbindungen (23, 20), welche im Betrieb mittels eines zwischen einem Halteteil (20) und einem Anschlag (31) eingespannten Kraftübertragungsteiles (22) mit Zugkräften von einstellbarer Grösse beaufschlagt werden, insbesondere von Säulen (23) in Pressen zur Verarbeitung von Kunststoffen, dadurch **gekennzeichnet**, dass
- a) die Verbindung (23, 20) soweit hergestellt wird, dass sie mit den Betriebskräften belastbar ist, dass
- b) dann die Verbindung (23, 20) mittels des Kraftübertragungsteiles (22) mit einer Zugkraft grösser als die maximale Betriebsbelastung belastet wird, dass
- c) dann eine Lücke (Δℓ) zwischen dem Kraftübertragungsteil (22) und dem Anschlag (31) mittels eines Füllelementes (34, 36) kraftschlüssig geschlossen wird und dass schliesslich
- d) die Belastung gemäss b) wieder aufgehoben wird.

2. Verfahren nach Anspruch 1 zum Vorspannen mehrerer, im Betrieb gleichzeitig belasteter Bolzen (23), dadurch **gekennzeichnet**, dass die Belastung gemäss 1.-d) erst dann wieder aufgehoben wird, wenn die Lücken (Δℓ) an allen Bolzen (23) gemäss 1.-c) geschlossen sind.

3. Verfahren nach einem der Ansprüche 1 oder 2 zur Verwendung in einer Presse zur Verarbeitung von Kunststoffen, dadurch **gekennzeichnet**, dass die Belastung der Verbindung (23, 20) gemäss 1.-b) über ein Spritzwerkzeug und eine Pressplatte (22) als Kraftübertragungsteil erfolgt.

4. Vorrichtung zum Vorspannen von Bolzen (23) für Verbindungen (23, 20), welche im Betrieb mittels eines zwischen einem Halteteil (20) und einem Anschlag (31) eingespannten Kraftübertragungsteiles (22) mit Zugkräften von einstellbarer Grösse beaufschlagt werden, insbesondere von Säulen (23) in Pressen zur Verarbeitung von Kunststoffen, **gekennzeichnet** durch einen Einsatz (34, 36), welcher am Kraftübertragungsteil (22) an der dem Anschlag (31) zugewandten Seite vorgesehen ist, derart, dass eine beim Vorspannen mittels des Kraftübertragungsteils (22) entstehende Lücke (Δℓ) zwischen dem Kraftübertragungsteil und dem Anschlag kraftschlüssig geschlossen werden kann.

5. Vorrichtung nach Anspruch 4, dadurch **gekennzeichnet**, dass der Bolzen (23) durch eine Bohrung (32) im Kraftübertragungsteil (22) hindurch geführt ist und dass der Einsatz (34) im Kraftübertragungsteil (22) als Gewindering (34) in der Bohrung (32) verstellbar ist.

6. Vorrichtung nach Anspruch 5, dadurch **gekennzeichnet**, dass der Innendurchmesser des Gewinderinges (34) grösser als der Aussendurchmesser des Bolzens (23) ist, dass der Anschlag als Schulter (31) am Bolzen (23) ausgebildet ist und dass zur kraftschlüssigen Verbindung zwischen Gewindering (34) und Schulter (31) ein geteilter Ring (36) auf den Bolzen (23) aufgesetzt ist.

7. Vorrichtung nach einem der Ansprüche 4 bis 6 in einer Presse zur Verarbeitung von Kunststoffen, dadurch **gekennzeichnet**, dass der Kraftübertragungsteil eine Pressplatte (22) ist und dass zum Vorspannen anstelle des Spritzwerkzeuges ein Hilfsklotz (30) vorgesehen ist.

8. Vorrichtung nach einem der Ansprüche 4 bis 7 in einer Presse zur Verarbeitung von Kunststoffen, dadurch **gekennzeichnet**, dass der Halteteil (20, 25) auf dem Bolzen (23) mittels einer Schraubverbindung einstellbar ist.
